# EUROPEAN PATENT SPECIFICATION

(11) **EP 3 801 157 B1**
(45) Date of publication and mention of the grant of the patent: **08.05.2024**
(21) Application number: 19810199.0
(22) Date of filing: 14.05.2019
(51) Int. Cl.: A47J 43/046, A47J 43/07

(54) **A MIXING BOWL ASSEMBLY FOR A FOOD PROCESSOR AND A FOOD PROCESSOR COMPRISING THE MIXING BOWL ASSEMBLY**
RÜHRSCHÜSSELANORDNUNG FÜR EINE KÜCHENMASCHINE UND KÜCHENMASCHINE MIT DER RÜHRSCHÜSSELANORDNUNG
ENSEMBLE BOL MÉLANGEUR POUR ROBOT MÉNAGER ET ROBOT MÉNAGER COMPRENANT L'ENSEMBLE BOL MÉLANGEUR

(30) Priority: 30.05.2018 CN 201810537954
(43) Date of publication of application: 14.04.2021
(73) Proprietor: Zhejiang Shaoxing Supor Domestic Electrical Appliance Co., Ltd., Shaoxing, Zhejiang 312017 (CN)
(72) Inventor: ZHOU, Zhongjian, Shaoxing, Zhejiang 312017 (CN); MENG, Chengcheng, Shaoxing, Zhejiang 312017 (CN); TANG, Lumeng, Shaoxing, Zhejiang 312017 (CN)
(74) Representative: LLR
(86) International application number: PCT/CN2019/086806
(87) International publication number: WO 2019/228181

(56) References cited:
- EP-A1- 3 075 296
- CN-A- 109 091 033
- CN-U- 205 041 278
- CN-U- 205 697 385
- CN-U- 206 026 138
- CN-U- 206 621 280
- CN-U- 207 012 127
- CN-Y- 2 852 880
- US-B1- 6 568 843

## Description

### Field of the Invention

The invention relates to the field of small home appliances, and in particular, a mixing bowl assembly for a food processor and a food processor comprising the mixing bowl assembly.

### Background of the Invention

With people's living standards increasing day by day, many different types of food processors appear on the market. The functions of a food processor can mainly include, but are not limited to: making soy milk, juicing, making rice paste, grinding meat, making shaved ice, making coffee, and/or preparing facial masks. Food processors can include machines that break and mix food, such as soy milk makers, blenders, and cell wall breaking food processors. Since the mixing blade assembly of existing food processors, especially of cell wall breaking food processors, are fixed in the mixing bowl, one can only use a brush to clean the blade assembly inside of the bowl. It is often hard to operate when the mixing bowl is deep. At the same time, inevitable blind spots for the cleaning exist in the mixing bowl assembly, which make it susceptible to bacteria growth and undesirable odors. Some blenders with detachable blade assembly have been proposed, such as those disclosed in CN 206621280U, CN 207012127U and EP 3075296A1.

### Summary of the Invention

The objective of the invention is to provide a mixing bowl assembly for a food processor and a food processor comprising the mixing bowl assembly, during the cleaning of which, a mixing blade assembly can be removed so as to facilitate the operation and achieve a thorough cleaning.

One aspect of the invention provides a mixing bowl assembly for a food processor.

The mixing bowl assembly for a food processor comprises: a mixing bowl comprising a bowl body and a bowl base provided at the bottom of the bowl body; a mixing blade assembly provided at the bottom of the mixing bowl; a fastener provided at the bowl base of the mixing bowl; the mixing blade assembly is removably mounted on the bowl base or the bowl body by means of the fastener, and seals the bottom of the bowl body after being mounted. A first end of the fastener is rotatably connected with
the bowl base, and a second end of the fastener is removably connected with the bowl base.

Optionally, the fastener is provided at an inner side of the bowl base.

Optionally, one of the first end of the fastener and the bowl base is provided with a rotation shaft, and the other of the first end of the fastener and the bowl base is provided with a shaft hole that cooperates with the rotation shaft.

Optionally, an elastic element is provided between the fastener and the bowl base. Optionally, the elastic element comprises at least one of the following: a torsion spring, a coil spring, a flat metal spring, and an elastic rubber element.

Optionally, one of the second end of the fastener and the bowl base is provided with a snap-fit boss, and the other of the second end of the fastener and the bowl base is provided with a snap-fit slot that cooperates with the snap-fit boss.

Optionally, the mixing blade assembly comprises a blade assembly, a fixing base that is fitted with the blade assembly, and a sealing ring provided at the fixing base that seals the bottom of the bowl body.

Optionally, the fixing base comprises a base and a base plate that is fixed to the base. Optionally, the edge of the base plate has a ring-shaped recess that cooperates with a side wall of the base to form a receiving space for receiving the sealing ring. Optionally, the blade assembly comprises a base body, a blade shaft passing through the base body, and a plurality of blades fixed to the blade shaft.

Optionally, the bowl base is fixed to the bottom of the bowl body by means of a fixing frame.

Optionally, the bowl body and the bowl base are integrally formed.

Another aspect of the invention provides a food processor. The food processor comprises a main unit on which the mixing bowl assembly for a food processor described above is removably mounted.

With the mixing blade assembly of the application being removably mounted on the bowl base or the bowl body by means of the fastener, and after being mounted, sealing the bottom of the bowl body, when the mixing bowl assembly needs to be cleaned after use, the mixing blade assembly can be removed, thus facilitating the operation and achieving thorough cleaning. Hence, there is no longer any blind spot of the mixing blade assembly that cannot be cleaned, so as to effectively prevent bacteria growth and undesirable odors.

### Description of the Drawings

Figure 1 is an assembled view in perspective of one embodiment of the food processor of the invention;
Figure 2 is an exploded view in perspective of the food processor shown in Figure 1;
Figure 3 is an exploded view in perspective of the mixing bowl shown in Figure 2;
Figure 4 is an assembled view in perspective of the mixing bowl shown in Figure 2;
Figure 5 is an exploded view in perspective of the mixing blade assembly shown in Figure 2;
Figure 6 is an assembled view in perspective of the mixing blade assembly shown in Figure 2;
Figure 7 is an exploded view in perspective of the mixing bowl assembly shown in Figure 2;
Figure 8 is a schematic view in perspective of the fastener shown in Figure 2;
Figure 9 is an assembled view in perspective of the mixing bowl assembly shown in Figure 2;
Figure 10 is an exploded view in perspective of another embodiment of the mixing bowl assembly of the food processor according to an aspect which is not covered by the claims;
Figure 11 is an assembled view in perspective of the mixing bowl assembly shown in Figure 10;
Figure 12 is an exploded view in perspective of yet another embodiment of the mixing bowl assembly of the food processor according to an aspect which is not covered by the claims;
Figure 13 is an assembled view in perspective of the mixing bowl assembly shown in Figure 12.

### Detailed Description of the Invention

Exemplary embodiments, which are illustrated in the accompanying drawings, will be described in detail here. In the description below related to figures, unless otherwise indicated, the same numbers in different figures refer to the same or similar elements. The modes of realization described in the following exemplary embodiments do not represent all modes of realization in accordance with the invention.

Instead, they are merely examples of devices in accordance with some aspects of the invention described in detail in the appended claims.

The terms used in the application are merely for the purpose of describing specific embodiments, and not intended to be limiting. Unless otherwise defined, the technical terms or scientific terms used in the application shall be used in the ordinary meaning as understood by a person of ordinary skills in the art to which the invention belongs. The words "First," "second," and similar terms used in the description and claims of the application do not represent any order, quantity, or importance, but are used to distinguish different components. Similarly, words such as "one" or "a" do not denote a quantity limitation but mean that there is at least one. "Multiple" or "several" means two or more. Unless otherwise indicated, words such as "front," "back," "bottom," and/or "top" are used for convenience of description and are not limited to one location or one spatial orientation. Words such as "comprise," or "include" are intended to mean that the element or item before "comprise" or "include" covers the element or item listed after "comprise" or "include" and its equivalent, without excluding other elements or items. Words such as "connect" or "connected" are not limited to physical or mechanical connections, and may include electrical connections, whether direct or indirect. Singular forms, "one" and "the," used in the description and the appended claims of the application are also intended to include the plural form, unless the context clearly indicates otherwise. It should also be understood that the term "and/or" used herein means and includes any and all possible combinations of one or more of the associated listed items.

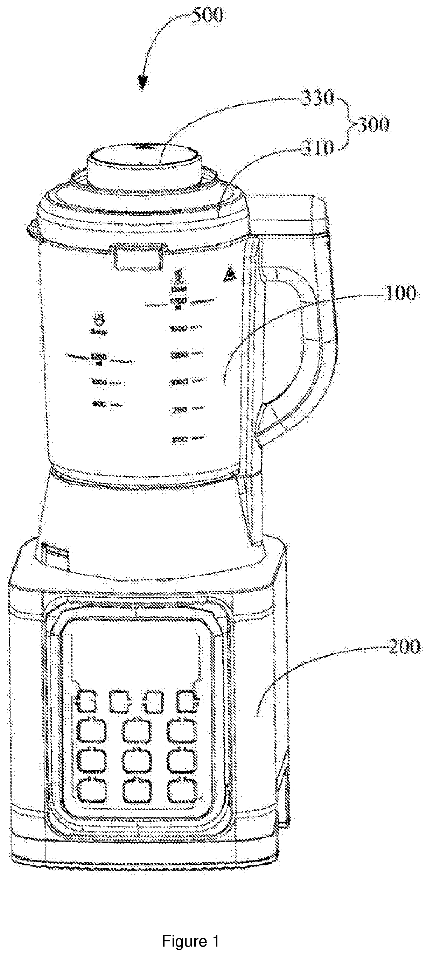

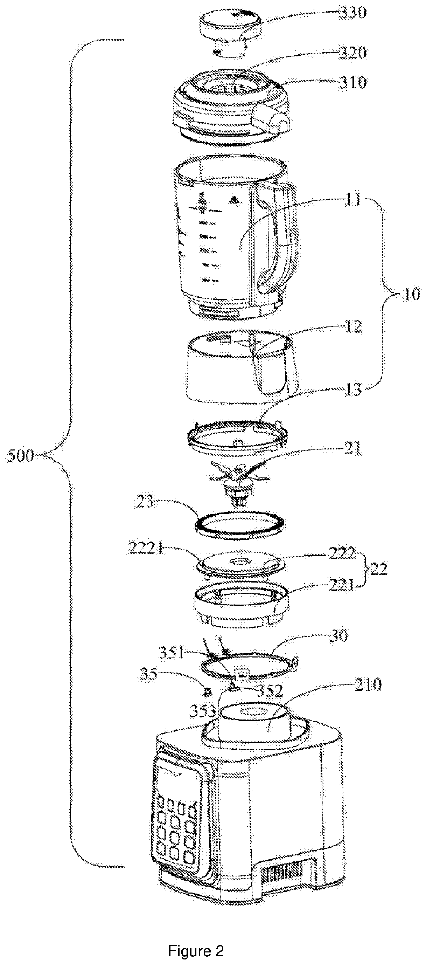

With reference to figures 1 and 2, the food processor 500 comprises a main unit 200, a mixing bowl assembly 100, and a bowl cover assembly 300. The mixing bowl assembly 100 is removably mounted to the main unit 200. The bowl cover assembly 300 is provided to cover the mixing bowl assembly 100, and comprises a bowl cover 310 and a venting cover 330 provided inside a hole 320 within the bowl cover 310.

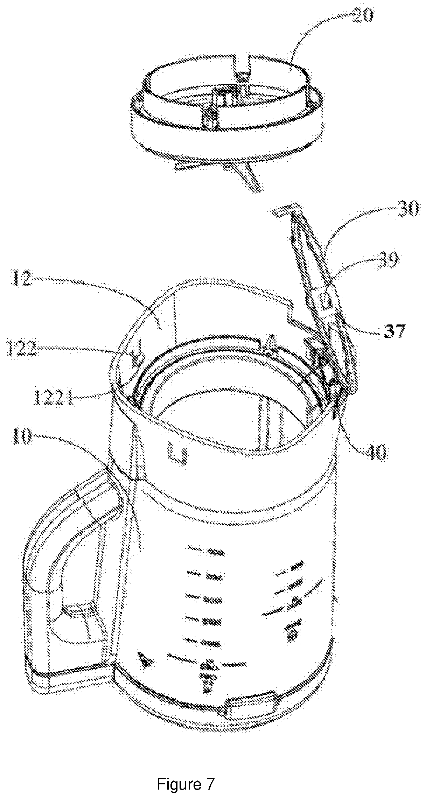

With reference to figures 2 and 7, the mixing bowl assembly 100 for a food processor (referred to below as the "mixing bowl assembly") comprises a mixing bowl 10, a mixing blade assembly 20, and a fastener 30. The mixing bowl 10 comprises a bowl body 11 and a bowl base 12 provided at the bottom of the bowl body 11. The mixing blade assembly 20 is provided at the bottom of the mixing bowl 10. The fastener 30 is provided at the bowl base 12 of the mixing bowl 10. The mixing blade assembly 20 is removably mounted on the bowl base 12 or the bowl body 11 by means of the fastener 30, and after being mounted, seals the bottom of the bowl body 11. When the mixing bowl assembly 100 needs to be cleaned after use, the mixing blade assembly 20 is removed, thus facilitating the operation and achieving thorough cleaning. Thus, there is no longer any blind spot of the mixing blade assembly 20 that cannot be cleaned, preventing bacteria growth and undesirable odors.

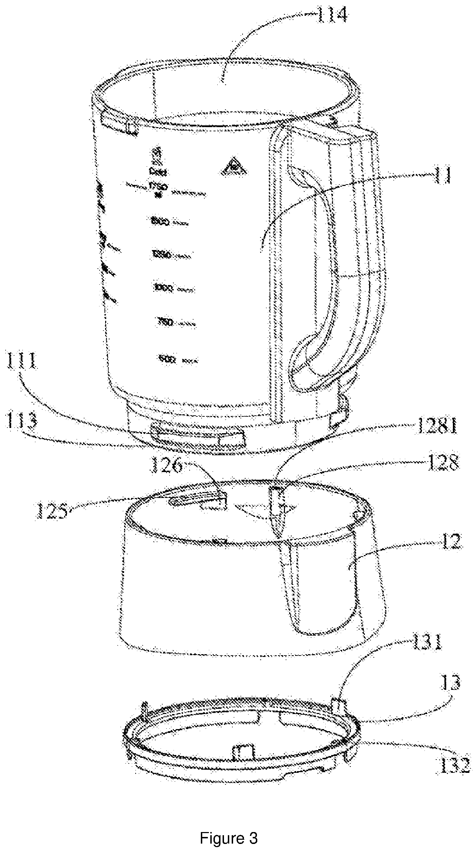

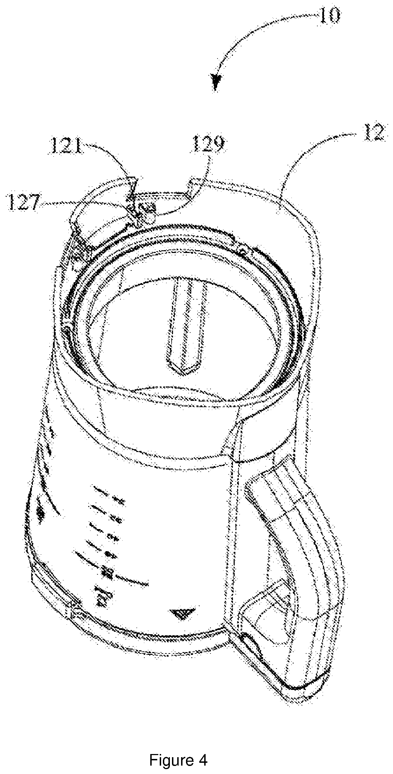

With reference to figures 3 and 4, a lower opening 113 is formed at the bottom of the bowl body 11, an upper opening 114 (i.e., the bowl opening) is formed at the top of the bowl body 11. The bowl body 11 is in the shape of a barrel that is through from top to bottom. In the illustrated embodiment, the bowl body 11 is in the shape of a circular barrel, with its transversal section being circular. In another embodiment, the side wall of the bowl body 11 gradually converges inward from top to bottom. In other words, the side wall is inclined relative to the axis of the bowl body 11, with for example a relatively small inclination. In another embodiment, the side wall of the bowl body 11 is parallel to the axis of the bowl body 11. Of course, the bowl body 11 can be in another shape and is not limited to the given examples.

In the illustrated embodiment, the bowl base 12 is substantially in the shape of a circular cylinder and is adapted to the shape of the bowl body 11. The mixing bowl 10 further comprises a fixing frame 13, by means of which the bowl base 12 is fixed to the bottom of the bowl body 11. A screw 128 is provided at the inner side of the bowl base 12 and has a first screw hole 1281. The fixing frame 13 has the shape of a circular ring and provided at the inner side of the bowl base 12. The fixing frame 13 is provided with a second screw hole 132 that corresponds to the first screw hole 1281 of the bowl base 12. The side wall at the bottom of the bowl body 11 is provided with a first snap-fit boss 111. The bowl base 12 is provided with a second snap-fit boss 125 that cooperates with the first snap-fit boss 111 and a first stopper 126 located at one side of the first snap-fit boss 111. The fixing frame 13 is provided with a second stopper 131 protrudingly located at the other side of the first snap-fit boss 111. When the bowl base 12 is mounted to the bowl body 11, the bottom of the bowl body 11 is first inserted into the bowl base 12, then the bowl base 12 is rotated by a certain angle, so that the second snap-fit boss 125 is positioned above the first snap-fit boss 111 and engaged with the first snap-fit boss 111 in a snap-fit manner. At this moment, the first stopper 126 is located at one side of the first snap-fit boss 111, so that the bowl base 12 cannot continue to rotate. Then, the fixing frame 13 is placed inside the bowl base 12 along the inner wall of the bowl base 12 and fixed to the bowl base 12 by having a fastening element passing through the second screw hole 132 and the first screw hole 1281. At this moment, the second stopper 131 is located at the other side of the first snap-fit boss 111, so that the bowl base 12 cannot rotate towards the other direction. Thus, the bowl base 12 is fixed to the bowl body 11.

In another embodiment, the bowl body 11 and the bowl base 12 are integrally formed.

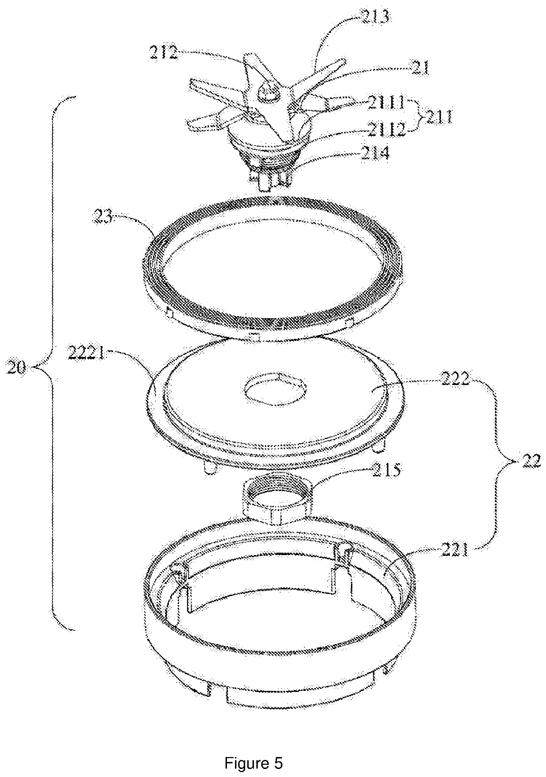

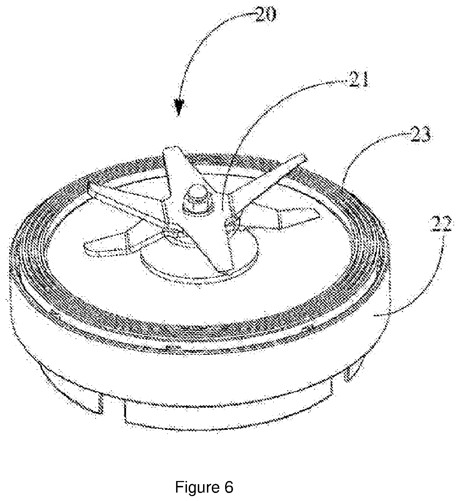

Now refer to figures 5 and 6. The mixing blade assembly 20 comprises a blade assembly 21, a fixing base 22 fitted with the blade assembly 21, and a sealing ring 23 provided at the fixing base 22. The sealing ring 23 seals the bottom of the bowl body 11. In the illustrated embodiment, the fixing base 22 comprises a base 221 and a base plate 222 fixed to the base 221. The food processor 500 in the embodiment has a heating function, and the main unit 200 is provided with a heating element 210 (see Fig. 2). The base plate 222 is made of a metal material having good heat conductivity. The base plate 222 is pressed against the heating element 210 for transferring the heat produced by the heating element 210 to the mixing bowl 100. The base 221 has a substantially cylindrical shape. The base plate 222 is fixed inside the base 221. The base 221 and the base plate 222 may be fixed by fasteners but are not limited thereto. The periphery of the base plate 222 has a ring-shaped recess 2221 that cooperates with the side wall of the base 221 to form a receiving space for receiving the sealing ring 23 which cooperates with the bottom of the bowl body 11 for sealing. In another embodiment, the food processor 500 does not have a heating function, and the base plate 222 does not have a heat transfer function. The base plate 222 and the base 221 may also be integrally formed.

The blade assembly 21 comprises a base body 211, a blade shaft 212 that passes through the base body 211, and a plurality of blades 213 fixed to the blade shaft 212. The bottom of the blade shaft 212 is provided with an upper connecter 214 that cooperates with a lower connecter of an electric motor inside the main unit 200. Driven by the electric motor, the blade shaft 212 rotates to drive the blades 213 to rotate inside the mixing bowl 100. The base body 211 comprises a body part 2111 and a cooperating part 2112 located below the body part 2111. The body part 2111 peripherally protruding from the cooperating part 2112. The cooperating part 2112 is provided with a screw thread. A nut 215 cooperates with the screw thread of the cooperating part 2112 so that the base plate 222 abuts against the body part 2111. The base plate 222 is fixed by being clamped by the nut 215 and the body part 2111. As such, the assembling of the mixing blade assembly 20 is completed.

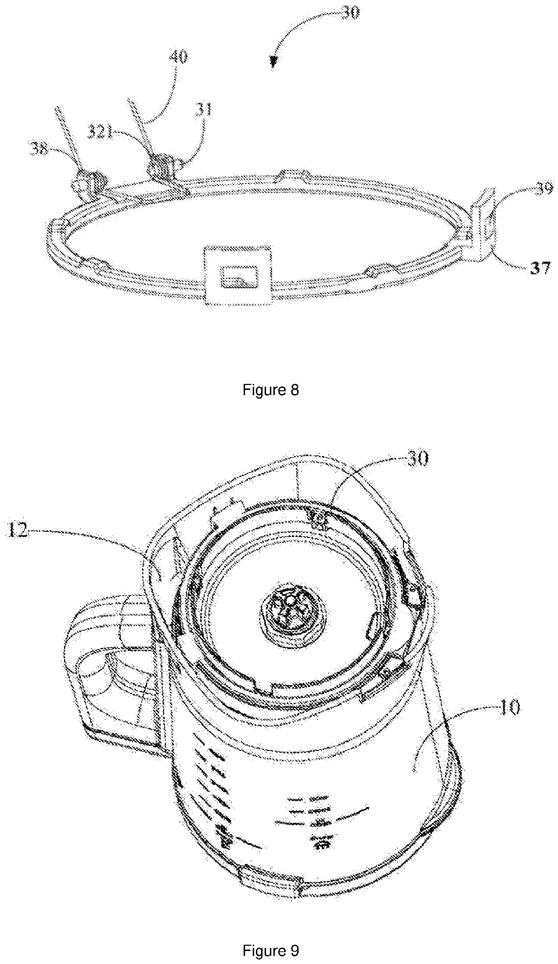

The fastener 30 may be disposed inside or outside the bowl base 12. In the embodiment with reference to figures 7 and 8, the fastener 30 is disposed at the inner side of the bowl base 12. A first end of the fastener 30 is rotatably connected to the bowl base 12, and a second end of the fastener 30 is removably connected to the bowl base 12.

One of the first end of the fastener 30 and the bowl base 12 is provided with a rotation shaft 31, and the other of the first end of the fastener 30 and the bowl base 12 is provided with a shaft hole 121 that cooperates with the rotation shaft 31 (see Fig. 4). In the illustrated embodiment, the first end of the fastener 30 is provided with a rotation shaft 31, and the inner side of the bowl base 12 is correspondingly provided with a shaft hole 121. Specifically, the first end of the fastener 30 is provided with a pair of base portions 38 from which the rotation shaft 31 is protrudes outward. The shaft hole 121 is open to facilitate the insertion of the rotation shaft 31 of the fastener 30 inside the shaft hole 121. The inner side of the bowl base 12 is provided with a pair of plots 127 (see Fig. 4) from which the shaft holes 121 are recessed. A pair of studs 129 are disposed on both sides of the plots 127. Pressing plates 35 (see Fig. 2) are fixedly coupled with the studs 129 to press and fix the rotating shaft 31 into the shaft hole 121. Specifically, the pressing plate 35 comprises a first portion 351 located between the plot 127 and the corresponding stud 129, and a second portion 352 and a third portion 353 respectively located at the two ends of the first portion 351. The second portion 352 is fixedly connected with the stud 129 by a fastener, and the third portion 353 is pressed against the rotation shaft 31, so as to fix the rotation shaft 31 in the shaft hole 121. In another embodiment, the shaft hole 121 may also be closed. In yet another embodiment, the first end of the fastener 30 is provided with a shaft hole, and the bowl base 12 is correspondingly provided with a rotation shaft.

Further, an elastic element 40 is provided between the fastener 30 and the bowl base 12. The elastic element 40 comprises at least one of the following: a torsion spring, a coil spring, a flat metallic spring, and an elastic rubber element. In the illustrated embodiment, the elastic element 40 is a torsion spring, as visible on figure 8. Specifically, the base portions 38 of the fastener 30 extend towards each other to form a pair of shaft portions 321. The coil portions of the torsion spring are sleeved on the shaft portions 321, as visible on figure 8. One end of the torsion spring abuts against the fastener 30, and the other end of the torsion spring abuts against the fixing frame 13 or the bowl base 12, so as to provide a force to outwardly turn the fastener 30.

One of the second end of the fastener 30 and the bowl base 12 is provided with a snap-fit boss 122, and the other of the second end of the fastener 30 and the bowl base 12 is provided a snap-fit slot 39 that cooperates with the snap-fit boss 122. In the illustrated embodiment, the bowl base 12 is provided with the snap-fit boss 122, and the second end of the fastener 30 is provided with the snap-fit slot 39 that cooperates with the snap-fit boss 122. The snap-fit boss 122 is formed on the inner side of the bowl base 12. The bowl base 12 is further provided with a notch which is substantially U-shaped and disposed around the snap-fit boss 122, so that the snap-fit boss 122 has a certain elasticity. The snap-fit boss 122 has an inclined guiding face 1221. The edge of the fastener 30 is further provided with a mounting part 37 in which the snap-fit slot 39 is formed.

When the fastener 30 is mounted, first the torsion spring is sleeved on the shaft portion 321 of the fastener 30, then the rotation shaft 31 of the first end of the fastener 30 is fixed to the shaft hole 121 of the bowl base 12, then the second end of the fastener 30 is turned towards the bowl base 12. When the mounting part 37 abuts against the guiding face 1221 of the snap-fit boss 122, the snap-fit boss 122 undergoes a certain elastic outward deformation, so that the second end of the fastener 30 can continue to rotate to a position where it cooperates with the mixing blade assembly 20. The snap-fit boss 122 then returns to its initial position and cooperates with the snap-fit slot 39. As such, the fastener 30 holds the mixing blade assembly 20 against the bottom of the bowl body 11 (see Fig. 9). When the cleaning is required, first the snap-fit cooperation between the snap-fit boss 122 and the snap-fit slot 39 is disengaged, then the fastener 30 is rotated around the rotation shaft 31 by a certain angle under the elastic force of the elastic element 40. Then the mixing blade assembly 20 can be removed for cleaning. In this way, the operation is facilitated, and the cleaning is thorough.

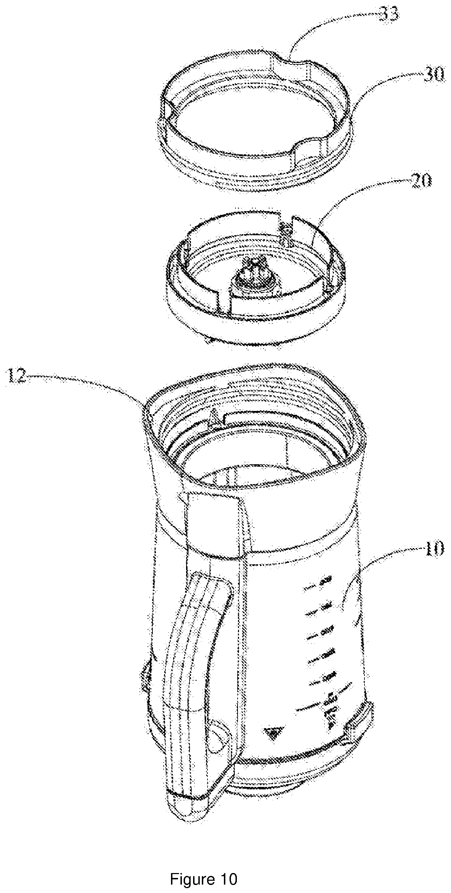

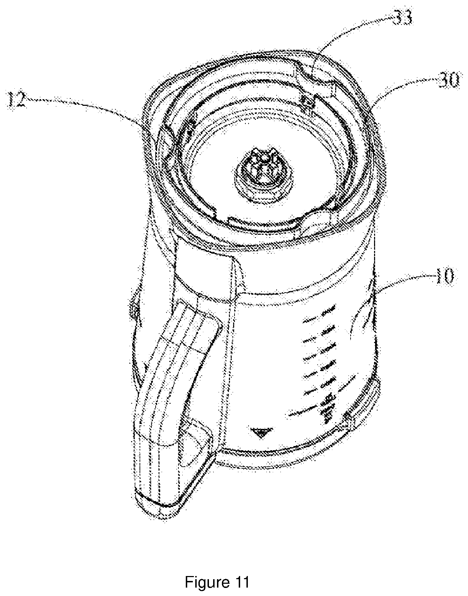

Now refer to figures 10 and 11. In the embodiment, which is not covered by the claims, the fastener 30 is connected with the bowl base 12 by means of a screw thread. Specifically, the bowl base 12 is provided with an inner screw thread. The upper end of the fastener 30 is provided with an outer screw thread that cooperates with the inner screw thread. The fastener 30 is screwed into the bowl base 12, so that the mixing blade assembly 20 is pressed against the bowl body 11. The upper end of the fastener 30 is provided with an outer screw thread, and the lower end of the fastener 30 is recessed with an operation portion 33. A user mounts or removes the fastener 30 using the operation portion 33, which is convenient to handle.

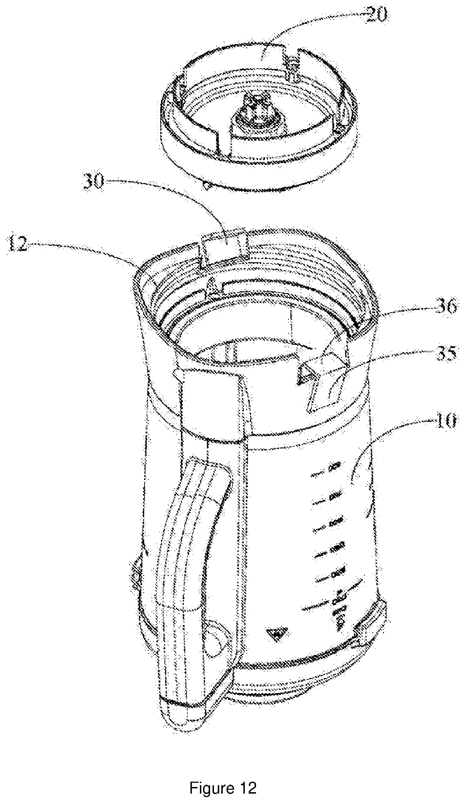

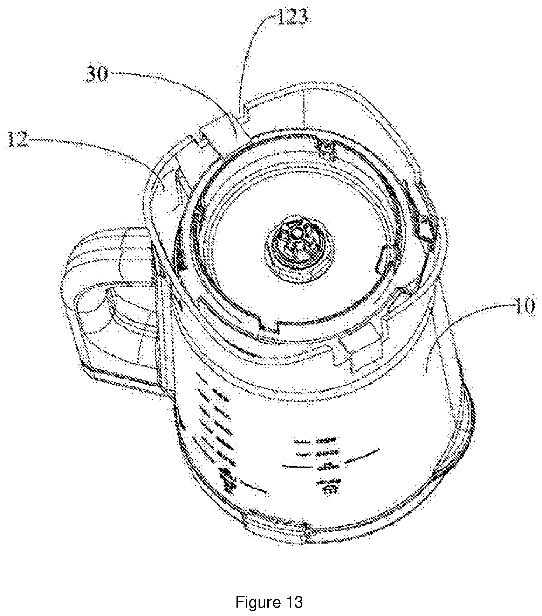

Now refer to figures 12 and 13. In the embodiment, which is not covered by the claims, the fastener 30 is provided at the outer side of the bowl base 12, and extends to the inner side of the bowl base 12 and abuts against the mixing blade assembly 20. The bottom of the bowl base 12 is provided with a groove 123. The fastener 30 comprises a body 35 that is fixed to the outer side of the bowl base 12 and a holding portion 36 that presses against the mixing blade assembly 20. The holding portion 36 extends inside the bowl base 12 through the groove 123. The body 35 can be fixed to the outer side of the bowl base 12 by means of a fastening element or by snap-fit etc. The holding portion 36 extends obliquely from the end of the body 35 towards the inside of the bowl base 12. In the embodiment, the fastener 30 has a certain elasticity. When the mixing blade assembly 20 is placed in or taken out, the fastener 30 is elastically deformed.

What has been described above are merely preferred embodiments, and not for the purpose of limiting the invention, which is defined by the appended claims.

## Claims

1. A mixing bowl assembly for a food processor comprising:
- a mixing bowl (10) comprising a bowl body (11) and a bowl base (12) provided at the bottom of the bowl body (11);
- a mixing blade assembly (20) provided at the bottom of the mixing bowl (10); and,
- a fastener (30) provided at the bowl base (12) of the mixing bowl (10), the mixing blade assembly (20) being removably mounted on the bowl base (12) or the bowl body (11) by means of the fastener (30), and sealing the bottom of the bowl body (11) after being mounted.
**characterized in that**, a first end of the fastener (30) is rotatably connected with the bowl base (12), and a second end of the fastener (30) is removably connected with the bowl base (12).

2. The mixing bowl assembly for a food processor according to claim 1, **characterized in that**, the fastener (30) is provided at an inner side of the bowl base (12).

3. The mixing bowl assembly for a food processor according to claim 1 or 2, **characterized in that**, one of the first end of the fastener (30) and the bowl base (12) is provided with a rotation shaft (31), and the other of the first end of the fastener (30) and the bowl base (12) is provided with an shaft hole (121) that cooperates with the rotation shaft (31).

4. The mixing bowl assembly for a food processor according to claim 3, **characterized in that**, an elastic element (40) is provided between the fastener (30) and the bowl base (12).

5. The mixing bowl assembly for a food processor according to claim 4, **characterized in that**, the elastic element (40) comprises at least one of the following: a torsion spring, a coil spring, a flat metal spring, and an elastic rubber element.

6. The mixing bowl assembly for a food processor according to claim 5, **characterized in that**, one of the second end of the fastener (30) and the bowl base (12) is provided with a snap-fit boss (122), and the other of the second end of the fastener (30) and the bowl base (12) is provided with a snap-fit slot (39) that cooperates with the snap-fit boss (122).

7. The mixing bowl assembly for a food processor according to any one of claims 1 to 6, **characterized in that**, the mixing blade assembly (20) comprises a blade assembly (21), a fixing base (22) that is fitted with the blade assembly (21), and a sealing ring (23) provided at the fixing base (22) and sealing the bottom of the bowl body (11).

8. The mixing bowl assembly for a food processor according to claim 7, **characterized in that**, the fixing base (22) comprises a base (221) and a base plate (222) that is fixed to the base (221).

9. The mixing bowl assembly for a food processor according to claim 8, **characterized in that**, the edge of the base plate (222) has a ring-shaped recess (2221) that cooperates with a side wall of the base (221) to form a receiving space for receiving the sealing ring (23).

10. The mixing bowl assembly for a food processor according to claim 7, **characterized in that**, the blade assembly (21) comprises a base body (211), a blade shaft (212) passing through the base body (211), and a plurality of blades (213) fixed to the blade shaft (212).

11. The mixing bowl assembly for a food processor according to any one of the preceding claims , **characterized in that**, the bowl base (12) is fixed to the bottom of the bowl body (11) by means of a fixing frame (13).

12. The mixing bowl assembly for a food processor according to any one of claims 1 to 10, **characterized in that**, the bowl body (11) and the bowl base (12) are integrally formed.

13. A food processor, **characterized in that**, it comprises:
- a main unit (200);
- a mixing bowl assembly (100) for a food processor according to any one of claims 1 to 12, which is removably mounted on the main unit (200).

## Patentansprüche

1. Eine Rührschüsselanordnung für eine Küchenmaschine, die Folgendes aufweist:
- eine Rührschüssel (10) mit einem Schüsselkörper (11) und einem Schüsselboden (12), der am Boden des Schüsselkörpers (11) vorgesehen ist;
- eine Rührklingenbaugruppe (20), die am Boden der Rührschüssel (10) vorgesehen ist; und,
- eine Befestigungsvorrichtung (30), die an dem Schüsselboden (12) der Rührschüssel (10) vorgesehen ist, wobei die Rührklingenbaugruppe (20) mittels der Befestigungsvorrichtung (30) abnehmbar an dem Schüsselboden (12) oder dem Schüsselkörper (11) angebracht ist und den Boden des Schüsselkörpers (11) nach der Anbringung abdichtet.
**dadurch gekennzeichnet, dass** ein erstes Ende der Befestigungsvorrichtung (30) drehbar mit dem Schüsselboden (12) verbunden ist und ein zweites Ende der Befestigungsvorrichtung (30) lösbar mit dem Schüsselboden (12) verbunden ist.

2. Rührschüsselanordnung für eine Küchenmaschine nach Anspruch 1, **dadurch gekennzeichnet, dass** die Befestigungsvorrichtung (30) an einer Innenseite des Schüsselbodens (12) vorgesehen ist.

3. Rührschüsselanordnung für eine Küchenmaschine nach Anspruch 1 oder 2, **dadurch gekennzeichnet, dass** eines der ersten Enden der Befestigungsvorrichtung (30) und des Schüsselbodens (12) mit einer Drehwelle (31) versehen ist und das andere der ersten Enden der Befestigungsvorrichtung (30) und des Schüsselbodens (12) mit einem Wellenloch (121) versehen ist, das mit der Drehwelle (31) zusammenwirkt.

4. Rührschüsselanordnung für eine Küchenmaschine nach Anspruch 3, **dadurch gekennzeichnet, dass** ein elastisches Element (40) zwischen der Befestigungsvorrichtung (30) und dem Schüsselboden (12) vorgesehen ist.

5. Rührschüsselanordnung für eine Küchenmaschine nach Anspruch 4, **dadurch gekennzeichnet, dass** das elastische Element (40) mindestens eines der folgenden Elemente aufweist: eine Torsionsfeder, eine Schraubenfeder, eine flache Metallfeder und ein elastisches Gummielement.

6. Rührschüsselbaugruppe für eine Küchenmaschine nach Anspruch 5, **dadurch gekennzeichnet, dass** entweder das zweite Ende der Befestigungsvorrichtung (30) oder der Schüsselboden (12) mit einem Einrastvorsprung (122) versehen ist, und das andere Ende des zweiten Endes der Befestigungsvorrichtung (30) oder des Schüsselbodens (12) mit einem Einrastschlitz (39) versehen ist, der mit dem Einrastvorsprung (122) zusammenwirkt.

7. Rührschüsselbaugruppe für eine Küchenmaschine nach einem der Ansprüche 1 bis 6, **dadurch gekennzeichnet, dass** die Rührklingenbaugruppe (20) eine Messerbaugruppe (21), einen Befestigungssockel (22), der mit der Messerbaugruppe (21) ausgestattet ist, und einen Dichtungsring (23) aufweist, der an dem Befestigungssockel (22) vorgesehen ist und den Boden des Schüsselkörpers (11) abdichtet.

8. Rührschüsselanordnung für eine Küchenmaschine nach Anspruch 7, **dadurch gekennzeichnet, dass** der Befestigungssockel (22) eine Basis (221) und eine an der Basis (221) befestigte Bodenplatte (222) aufweist.

9. Rührschüsselanordnung für eine Küchenmaschine nach Anspruch 8, **dadurch gekennzeichnet, dass** der Rand der Bodenplatte (222) eine ringförmige Aussparung (2221) aufweist, die mit einer Seitenwand des Bodens (221) zusammenwirkt, um einen Aufnahmeraum zur Aufnahme des Dichtungsrings (23) zu bilden.

10. Rührschüsselanordnung für eine Küchenmaschine nach Anspruch 7, **dadurch gekennzeichnet, dass** die Messerbaugruppe (21) einen Grundkörper (211), einen durch den Grundkörper (211) verlaufenden Messerschaft (212) und eine Vielzahl von am Messerschaft (212) befestigten Messern (213) aufweist.

11. Rührschüsselanordnung für eine Küchenmaschine nach einem der vorhergehenden Ansprüche, **dadurch gekennzeichnet, dass** der Schüsselboden (12) mittels eines Befestigungsrahmens (13) am Boden des Schüsselkörpers (11) befestigt ist.

12. Rührschüsselanordnung für eine Küchenmaschine nach einem der Ansprüche 1 bis 10, **dadurch gekennzeichnet, dass** der Schüsselkörper (11) und der Schüsselboden (12) einstückig ausgebildet sind.

13. Küchenmaschine, **dadurch gekennzeichnet, dass** sie aufweist:
- eine Haupteinheit (200);
- eine Rührschüsselanordnung (100) für eine Küchenmaschine nach einem der Ansprüche 1 bis 12, die abnehmbar an der Haupteinheit (200) angebracht ist.

## Revendications

1. Un ensemble bol mélangeur pour robot ménager, comprenant :
- un bol mélangeur (10) comprenant un corps de bol (11) et une base de bol (12) placée au fond du corps de bol (11) ;
- un ensemble lame de mélange (20) placé au fond du bol de mélange (10) ; et
- une fixation (30) prévue au niveau de la base du bol (12) du bol mélangeur (10), l'ensemble lame de mélange (20) étant monté de manière amovible sur la base du bol (12) ou le corps du bol (11) au moyen de la fixation (30), et fermant de façon étanche le fond du corps de bol (11) après avoir été monté,
**caractérisé en ce qu'**une première extrémité de la fixation (30) est reliée de manière rotative à la base du bol (12), et une deuxième extrémité de la fixation (30) est reliée de manière amovible à la base du bol (12).

2. L'ensemble bol mélangeur pour un robot ménager selon la revendication 1, **caractérisé en ce que** la fixation (30) est prévue sur un côté intérieur de la base du bol (12).

3. L'ensemble bol mélangeur pour robot ménager selon la revendication 1 ou la revendication 2, **caractérisé en ce que** l'une parmi la première extrémité de la fixation (30) et la base du bol (12) est dotée d'un arbre de rotation (31), et l'autre parmi la première extrémité de la fixation (30) et la base de bol (12) est dotée d'un trou d'arbre (121) qui coopère avec l'arbre de rotation (31).

4. L'ensemble bol mélangeur pour robot ménager selon la revendication 3, **caractérisé en ce qu'**un élément élastique (40) est prévu entre la fixation (30) et la base du bol (12).

5. L'ensemble bol mélangeur pour robot ménager selon la revendication 4, **caractérisé en ce que** l'élément élastique (40) comprend au moins l'un parmi les éléments suivants : un ressort de torsion, un ressort hélicoïdal, un ressort métallique plat et un élément en caoutchouc élastique.

6. L'ensemble bol mélangeur pour robot ménager selon la revendication 5, **caractérisé en ce que** l'une parmi la deuxième extrémité de la fixation (30) et la base du bol (12) est munie d'un bossage à encliquetage (122), et l'autre parmi la deuxième extrémité de la fixation (30) et la base de bol (12) est dotée d'une fente d'encliquetage (39) qui coopère avec le bossage d'encliquetage (122).

7. L'ensemble bol mélangeur pour robot ménager selon l'une quelconque des revendications 1 à 6, **caractérisé en ce que** l'ensemble lame mélangeur (20) comprend un ensemble lame (21), une base de fixation (22) qui est équipée de l'ensemble lame (21), et un anneau d'étanchéité (23) disposé au niveau de la base de fixation (22) et fermant de façon étanche le fond du corps de bol (11).

8. L'ensemble bol mélangeur pour un robot ménager selon la revendication 7, **caractérisé en ce que** la base de fixation (22) comprend une base (221) et une plaque de base (222) qui est fixée à la base (221).

9. L'ensemble bol mélangeur pour robot ménager selon la revendication 8, **caractérisé en ce que** le bord de la plaque de base (222) présente un évidement en forme d'anneau (2221) qui coopère avec une paroi latérale de la base (221) pour former un espace de réception afin de recevoir l'anneau d'étanchéité (23).

10. L'ensemble bol mélangeur pour robot ménager selon la revendication 7, **caractérisé en ce que** l'ensemble lame (21) comprend un corps de base (211), un arbre de lame (212) traversant le corps de base (211), et une pluralité de lames (213) fixées à l'arbre de lame (212).

11. L'ensemble bol mélangeur pour robot ménager selon l'une quelconque des revendications précédentes, **caractérisé en ce que** la base du bol (12) est fixée au fond du corps du bol (11) au moyen d'un châssis de fixation (13).

12. L'ensemble bol mélangeur pour un robot ménager selon l'une quelconque des revendications 1 à 10, **caractérisé en ce que** le corps du bol (11) et la base du bol (12) sont formés d'un seul tenant.

13. Un robot ménager, **caractérisé en ce qu'**il comprend :
- une unité principale (200) ;
- un ensemble bol mélangeur (100) pour un robot ménager selon l'une quelconque des revendications 1 à 12, qui est monté de manière amovible sur l'unité principale (200).
